# EUROPEAN PATENT SPECIFICATION

(11) **EP 2 515 625 B1**
(45) Date of publication and mention of the grant of the patent: **14.08.2013**
(21) Application number: 10810964.6
(22) Date of filing: 03.12.2010
(51) Int. Cl.: A01B 69/00, A01B 79/00

(54) **SYSTEM AND METHOD FOR ALERTING THAT A VEHICLE WILL ARRIVE AT A POINT-OF-INTEREST WITHIN A PREDETERMINED TIME INTERVAL**
SYSTEM UND VERFAHREN FÜR DEN VERWEIS AUF DIE ANKUNFT EINES FAHRZEUG AN EINEM BESTIMMTEN ORT INNERHALB EINER VORDEFINIERTEN ZEITSPANNE
SYSTÈME ET PROCÉDÉ DESTINÉS À ALERTER DE L'ARRIVÉE FUTURE D'UN VÉHICULE À UN POINT D'INTÉRÊT DANS UN INTERVALLE DE TEMPS PRÉDÉTERMINÉ

(30) Priority: 22.12.2009 US 645031
(43) Date of publication of application: 31.10.2012
(73) Proprietor: Agco Corporation, Duluth, Georgia 30096 (US)
(72) Inventor: O'NEIL, Christopher Burton, Wichita, KS 67218 (US); SCHMIDT, Lee, A., Newton, KS 67114 (US)
(74) Representative: AGCO Intellectual Property Department
(86) International application number: PCT/IB2010/003096
(87) International publication number: WO 2011/077207

(56) References cited:
- EP-A1- 2 098 936
- US-A- 5 684 476
- US-A1- 2009 216 406

## Description

### BACKGROUND

### 1. FIELD

Embodiments of the present invention relate to systems and methods for managing agricultural vehicles. More particularly, embodiments of the present invention relate to a system and method for improving efficiency of agricultural vehicles by generating alerts when a vehicle is a predetermined distance from an area of interest.

### 2. RELATED ART

Agricultural vehicles must be periodically refilled with seeds, fertilizer, pesticides, herbicides, water, and other applied materials and with fuel. Some of these, most notably fertilizer, pesticides, and herbicides, need time to be prepared. If an agricultural vehicle arrives at a refilling station unannounced, the vehicle and the operator must wait for the material to be prepared before the vehicle is refilled, thus wasting the operator's time.

United States Patent Application US 2009/0216406 (Senneff et al) describes a method and system for managing the turning of a vehicle including establishing a boundary of a work area. A location-determining receiver determines an observed position and velocity of the vehicle in the work area, and an estimator uses this data to estimate a first duration from a first time when the vehicle will intercept the boundary.

### SUMMARY The disadvantages mentioned before are solved according to the

invention with a system, method and computer readable medium

according to claims 1, 11 and 14.

Embodiments of the present invention solve the above-mentioned problems and provide a distinct advance in the art of agricultural vehicles. More particularly, embodiments of the invention provide a system and method for alerting that a vehicle will arrive at a point of interest within a predetermined time interval.

An embodiment of the system may be used with any vehicle and comprises a vehicle-mounted assembly and a remote assembly. The vehicle-mounted assembly comprises a location-determining device for determining geographic locations of the vehicle, a first computing device for comparing the vehicle's current location to a stored geofence and for collecting information from the location-determining device and various vehicle subsystems, and a first communication device for transmitting data about the location of the vehicle. The vehicle-mounted assembly may further comprise various subsystems that provide other meaningful information to the first computing device, and various subsystems that add functionality to the first computing device. The remote assembly may be positioned at or near a refilling station, or other area, and comprises a second communication device for receiving data from the first communication device, and a second computing device for computing a time-geofence and for alerting the user. The remote assembly may further comprise various subsystems that provide other meaningful information or add functionality to the second computing device.

An embodiment of the method may comprise receiving geographic location data from a vehicle, computing a time-geofence, determining whether the vehicle crossed the time-geofence, and generating an alert to a user. A computing device uses the location data and other available data to determine the vehicle's speed. A time-geofence is computed, at least partially, based on the fastest route to a point-of-interest to determine whether the vehicle is inside or outside the time-geofence. If the vehicle crosses the time-geofence boundary, a user is notified that the vehicle will arrive at the point-of-interest within the predetermined time interval.

This summary is provided to introduce a selection of concepts in a simplified form that are further described below in the detailed description. This summary is not intended to identify key features or essential features of the claimed subject matter, nor is it intended to be used to limit the scope of the claimed subject matter.

Other aspects and advantages of the present invention will be apparent from the following detailed description of the embodiments and the accompanying drawing figures.

### BRIEF DESCRIPTION OF THE DRAWING FIGURES

Embodiments of the present invention are described in detail below with reference to the attached drawing figures, wherein:
FIG. 1 is a schematic diagram illustrating a system constructed in accordance with an embodiment of the invention;
FIG. 2 is a map of a point-of-interest with three roads leading thereto, a geofence, and a computed time-geofence;
FIG. 3 is a flow chart of a method of determining when to send an alert to a user in accordance with an embodiment of the invention; and
FIG. 4 is a map showing a computation of a time-geofence; and
FIG. 5 is another map showing a computation of a time-geofence using a divide-and-conquer method.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The following detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims, along with the full scope of equivalents to which such claims are entitled.

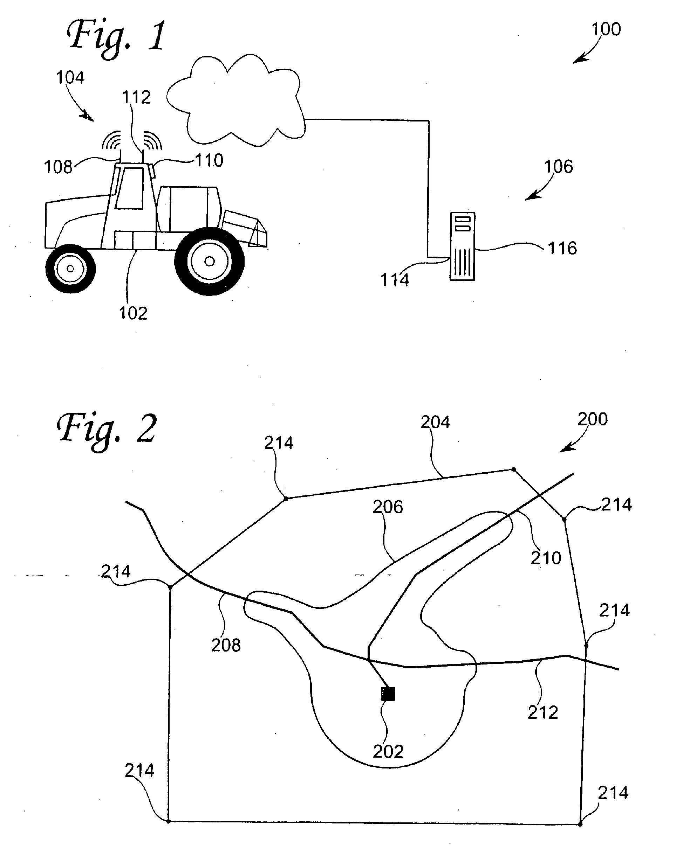

FIG. 1 illustrates a system 100 for alerting a user that a vehicle 102 will arrive at a point of interest within a predetermined time interval and broadly comprises a vehicle-mounted assembly 104 and a remote assembly 106.

The vehicle-mounted assembly 104 broadly comprises a location-determining device 108, a first computing device 110, and a first communication device 112. The vehicle 102 may be any vehicle that a user would like to track. For example, the vehicle 102 may be a semi-trailer truck, a rental car, or various other vehicles. In one embodiment, the vehicle 102 is an agricultural vehicle, such as an agricultural sprayer, combine, tractor, or the like. The vehicle 102 may comprise various subsystems that enhance the functionality of the vehicle 102 in some meaningful way. For example, an agricultural sprayer may have a fuel-delivery subsystem, an engine subsystem, a sprayer subsystem, and a location-determining subsystem.

The location-determining device 108 is an electronic device connected to the first computing device 110 and the vehicle for determining geographic locations of the vehicle. The location-determining device 108 may be any electronic device capable of determining geographic locations, such as LORAN, VHF omidirectional range (VOR), radio beacons, ultrasonic ranging, or the like. In one embodiment, the location-determining device 108 is a global positioning system (GPS) receiver capable of determining vehicle geographic locations, heading and speed from various navigation satellites. The location-determining device 108 may further comprise an antenna or other device to improve its navigational abilities.

The first computing device 110 is an electronic processing device disposed on or within the vehicle 102 for performing various mathematical and logical operations on data and is operable to provide data to the first communication device 112. The first computing device 110 may be an electronic processor, an application specific integrated circuit (ASIC), a field programmable gate array (FPGA) or any other electronic device capable of performing mathematical and logical operations on data. The first computing device 110 may additionally comprise various subsystems that augment the functionality of the first computing device 110 in some meaningful way. For example, the first computing device 110 may have a persistent storage subsystem capable of storing data when the first computing device 110 is powered down and it may have a video subsystem capable of presenting information on a video display screen. The first computing device 110 may also be connected to the various subsystems of the vehicle 102, possibly through a data-capture subsystem, to discern various information about the vehicle 102. For example, the fuel-delivery subsystem may communicate to the first computing device 110 that the fuel tank has a certain amount of fuel remaining. Similarly, a sprayer subsystem may communicate to the first computing device 110 that a sprayer tank currently contains a certain amount of liquid and the sprayer elements are spraying at a particular rate. In some embodiments, the first computing device 110 may be operable to compress the data to reduce transmission costs. In some embodiments, the first computing device 110 is operable to determine whether the vehicle's geographic location, as determined by the location-determining device 108, is within a geofence, such as the geofence 204 of FIG. 2, defined by a plurality of points stored, for example, in a persistent storage subsystem.

The first communication device 112 is an electronic communication device in communication with the first, computing device 110 for sending various data to the second communication device 114. The first communication device 112 may be a radio transmitter, a Bluetooth-compatible transmitter, a Wi-Fi/802.11-compatible transmitter, or any other device capable of transmitting data over a distance. In one embodiment, the first communication device 112 is a wireless modem capable of connecting to the Internet. In one embodiment, the first computing device 110 may cause the first communication device 112 to send data only if the location of the vehicle 102 is within a geofence, such as the geofence 204 of FIG. 2. In various embodiments, the first communication device 112 may transmit data by transmitting data to a first communication device of a second vehicle (not shown). Then the first communication device of the second vehicle (not shown) may send the data to the second communication device 114 on behalf of the first communication device 112 of the vehicle 102.

The remote assembly 106 may be located in a data center, an office, at a point-of-interest, or in other various locations, and broadly comprises a second communication device 114, and a second computing device 116. The second communication device 114 is an electronic communication device in communication with the second computing device 116 for receiving various data from the first communication device 112. The second communication device 114 may be a radio receiver, a Bluetooth-compatible receiver, a Wi-Fi/802.11-compatible receiver, or any other device capable of receiving data over a distance. In one embodiment, the second communication device 114 is an ethernet adapter capable of connecting with an internet gateway, such as a router.

The second computing device 116 is an electronic processing device for performing various mathematical and logical operations on data, computing a time-geofence, and sending an alert to a user. The second computing device 116 may be an electronic processor, an application specific integrated circuit (ASIC), a field programmable gate array (FPGA), or any other electronic device, or combination of devices, capable of performing mathematical and logical operations on data. In one embodiment, the second computing device 116 is a server-class computer. The second computing device 116 may additionally comprise various subsystems that augment the functionality of the second computing device 116 in some meaningful way, such as the video-display subsystem or the persistent-storage subsystem described above.

In use, the various subsystems of the vehicle 102 provide data, such as data representative of a geographic location, heading, speed, engine temperature and condition, or fuel level of the vehicle, to the first computing device 110. The first computing device 110 may perform logical or mathematical computation on the data, such as to determine the vehicle's status. For example, if the vehicle 102 is an agricultural sprayer and the sprayer booms are not extended, then the first computing device 110 may logically compute that the vehicle 102 is not working. The first computing device 110 may direct the first communication device 112 to send any collected data immediately, at predefined intervals, or whenever a buffer is filled to a predetermined level. For example, the first computing device 110 may direct the first communication device 112 to send data when a 10-kilobyte buffer has 7 kilobytes of data stored therein.

The first communication device 112 sends the data directly or indirectly to the second communication device 114. In one embodiment, the first communication device 112 connects with the second communication device 114 over the internet using the TCP/IP protocol and uploads compressed data using the HTTP protocol. In turn, the second communication device 114 receives the compressed data and provides the compressed data to the second computing device 116. The second computing device 116 examines the data and may determine a time-geofence 206 for the vehicle 102, based at least partially on the uploaded data and based on a predetermined time interval. The second computing device 116 compares the boundary of the time-geofence 206 to the geographic location of the vehicle 102. If the vehicle 102 crosses from outside the time-geofence 206 to inside the time-geofence 206, the second computing device 116 is operable to generate an alert.

An alert may be any action by the second computing device 116 reasonably calculated to inform a user that the vehicle 102 is likely to arrive at the point of interest within the predetermined time interval, as described below.

Turning now to FIG. 2, a map of an area 200 is shown broadly comprising a point of interest 202, a geofence 204, a time-geofence 206, and a first road 208, a second road 210, and a third road 212, each road leading to the point of interest 202. This map demonstrates the geofence 204 and the time-geofence 206 that may be used by an embodiment of the invention.

The point of interest 202 is a location where the knowledge that a vehicle 102 will arrive within a predetermined time interval is useful in some way. The point of interest 202 may be a freight hub, a car rental facility, a filling station, or any other location. In one embodiment, the point of interest 202 may be a fertilizer filling station. If liquid fertilizer requires ten minutes to mix, the knowledge that an agricultural sprayer will arrive within fifteen minutes is useful to improve efficiency of the farm operations because the fertilizer can be mixed while the agricultural sprayer is traveling to the filling station.

The geofence 204 broadly comprises a plurality of geographic locations 214 defining a boundary around the point of interest 202. The plurality of geographic locations 214 may be stored by the first computing device 110, the second computing device 116, or in a subsystem thereof, to determine the geofence 204. The geofence 204 serves as a filter wherein only vehicles within the geofence 204 are considered when computing time-geofences, such as time-geofence 206.

The time-geofence 206 is a boundary defined by the locus of points corresponding to geographic locations where a vehicle 102 can arrive at the point of interest 202 in exactly a predetermined time interval. Correspondingly, a vehicle 102 inside the time-geofence 206 can arrive at the point of interest 202 within the predetermined time interval and any vehicle 102 outside the time-geofence 206 cannot arrive at the point of interest 202 within the predetermined time interval. For example, assuming the predetermined time interval is ten minutes, a vehicle 102 located at any point on the time-geofence 206 can arrive at the point of interest in ten minutes.

Each of the three roads may have a different speed limit. For example, the first road 208 may have a speed limit of 45 mph, the second road 210 may have a speed limit of 65 mph, and the third road 212 may have a speed limit of 25 mph. Any location not specified as a road is a field with a selected maximum speed, such as15 mph. In addition, particular regions may have selected maximum speeds or particular regions may have selected maximum speeds when traveling in a particular direction, such as toward the peak of a hill. Thus, a particular geographic location may have a first maximum speed limit when traveling predominantly in a first direction and a second maximum speed when traveling predominantly a second direction, as required under the circumstances.

The portion of the time-geofence 206 near road two 210 extends far down the road because, at 65 mph, the vehicle 102 will be able to travel a much further distance than the vehicle 102 traveling at 45 mph on the first road 208, or 25 mph on the third road 210. Furthermore, traveling across the field is slower than traveling on a road and, thus, the time-geofence 206 does not extend significantly into areas without easy access to roads.

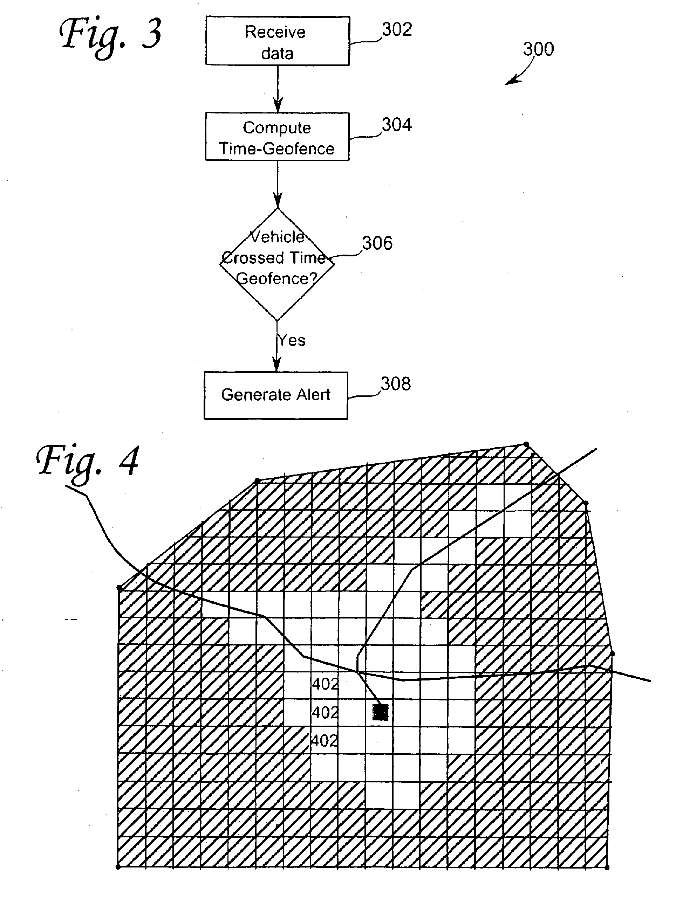

Turning now to FIG. 3, an embodiment of a method 300 that may be used when practicing the invention is illustrated. Though reference will be made to the system 100 of FIG. 1, it should be understood that the method is not limited to any particular system. The method 300 broadly comprises receiving location data, computing a time-geofence, determining whether the vehicle crossed the time-geofence, and generating an alert.

In step 302, data representative of a geographic location of the vehicle, the a speed the vehicle, a heading of the vehicle, or various other data about the vehicle or a subsystem of the vehicle, is received by a communication device, such as by the second communication device 114. In some embodiments, the data may be compressed and, thus, step 302 may additionally comprise decompressing the data into a more easily useable form. In some embodiments, the data may be further stored, for example in an electronic memory or persistent storage, for later comparison.

In step 304, a time-geofence, such as time-geofence 206 of FIG. 2, is calculated by a computing device, such as the second computing device 116 of FIG. 1. The time-geofence 206 may be calculated in numerous ways. In an embodiment shown particularly in FIG. 4, the area inside the geofence 204 is subdivided into a plurality of equally-spaced regions 402 wherein the boundaries of the regions 402 comprise a rectangular grid. Then, for each region 402, a point within the region 402 is selected, such as the center. A route may be computed from the center of the region 402 to a point of interest, such as point of interest 202 of FIG. 2. Then, the distance of each leg and expected speed on each leg can be utilized to compute a best-case time of arrival at the point of interest 202. As shown in FIG. 4, regions outside the time-geofence 206 are shown hatched and areas inside the time-geofence 206 are unhatched. Alternatively, instead of selecting a regular point inside a region various techniques may be used to improve fidelity and provide a more accurate time-geofence 206, such as oversampling, jittered sampling, and weighted sampling.

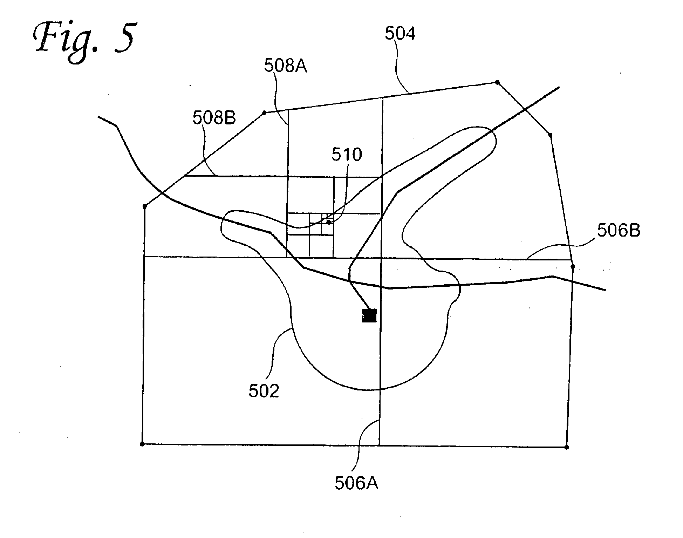

In another embodiment shown particularly in FIG. 5, a time-geofence 502 may be calculated using a divide-and-conquer technique. The area within the geofence 504 is divided in half horizontally and vertically to form four regions along a first vertical boundary 506A and a first horizontal boundary 506B. For each region, multiple sampling locations are chosen within the region, for example each corner and the center of the region may be used, and a quickest route to the point-of-interest is computed for each. If all the sampling locations are outside the time-geofence that is all the quickest routes will take longer than the predetermined interval, the entire region is considered outside the time-geofence and no more computation is performed. Similarly if all the sampling locations are within the time-geofence 502 then no more computation is performed. If some of the sampling locations are outside the time-geofence 502 and others are within the time-geofence 502, the region is further subdivided into four sub-regions, such as by second vertical boundary 508A and second horizontal boundary 508B, and the procedure is repeated. The procedure terminates when a predefined number of subdivisions (i.e. recursion depth) have occurred or when all the regions are known.

In addition, only the region bounding a vehicle location 510 is of particular importance. Thus, this and other methods of computing a time-geofence 502 may be improved by only computing regions that contain the vehicle location 510, or by only computing regions within a particular radius of the vehicle location 510. In this embodiment, the vehicle location 510 will be in one of the four regions at each recursion. The remaining three regions may be pruned and not calculated further. Then the same procedure is performed within the region bounding the vehicle's location 510. The output of this method is shown in FIG. 5.

Additionally, historical information may be considered when computing the time-geofence 206. In some embodiments, the time-geofence 206 may be computed using the result of computations from a predefined period. For example, the computation of the time-geofence 206 may consider time-geofences computed for this vehicle, or others of similar capability or model, within the past two-months.

Turning back to FIG. 3, in step 306 the computing device determines whether the vehicle crossed the time-geofence 206. In one embodiment, the determination can be made by observing whether the vehicle was previously inside the time-geofence 206, or whether the vehicle was outside the time-geofence 206. If the vehicle was outside the time-geofence 206 and the vehicle is now inside the time-geofence 206, the vehicle crossed the time-geofence 206. If the vehicle was inside the time-geofence 206 and the vehicle is also now inside the time-geofence 206, the vehicle did not cross the time-geofence 206.

In some embodiments, step 304 or step 306 may also account for various irregularities that may occur during normal operations and to ensure that the vehicle is actually traveling to the point-of-interest 202. For example, a vehicle may be working a field and, based at least partially on its speed and location, it is inside a time-geofence 206. Then, the vehicle reaches the end of a row in a field, slows and turns. Thus, due to its decreased speed, the time-geofence 206 may contract and the vehicle may be outside the time-geofence 206. After completing its turn, the vehicle may increase its speed and, thus, be within the time-geofence 206 again. Situations such as this may generate false alerts. Thus, in some embodiments, step 304 or step 306 may ignore vehicles that are in a working state. In various other embodiments, step 304 or step 306 may not consider a vehicle to be inside or outside the time-geofence 206 until the vehicle has been determined to be within or outside of the time-geofence 206 for a predetermined length of time. Various other techniques may also be used to reduce or eliminate false alerts.

In step 308, the computing device generates an alert to warn a user that the vehicle crossed the time-geofence 206. The alert may be an e-mail message, a short message service (SMS) message, an instant message (IM), text or graphic displayed on a web page, a message displayed on a computer monitor, a message on a scrolling light-emitting diode (LED) message board, a combination thereof, or the like. In one embodiment, the second computing device 116 generates an e-mail message and updates text on a web page to alert a user that the vehicle 102 will arrive within a predetermined time interval. Thus, the invention described above advantageously alerts users that a vehicle will arrive at the point-of-interest within a particular time interval. This improves the efficiency of operations by reducing or eliminating vehicle downtime.

Although the invention has been described with reference to the embodiments illustrated in the attached drawing figures, it is noted that equivalents may be employed and substitutions made herein without departing from the scope of the invention as recited in the claims.

Having thus described various embodiments of the invention, what is claimed as new and desired to be protected by Letters Patent includes the following:

## Claims

1. A system (100) for alerting a user that an agricultural vehicle (102) will arrive at a point of interest (202) within a predetermined time interval, the system comprising:
a location-determining device (108) connected to the vehicle for determining a location of the vehicle;
a first communication device (112) connected to the location-determining device (108) for sending data representative of the location of the vehicle over a communications network;
a second communication device (114) for receiving the data from the first communication device (112); and
a computing device (116) in communication with the second communication device (114) for computing a time-geofence (206), and for alerting the user that the vehicle will arrive at the point of interest (202) within the predetermined time interval,
**characterised in that** the computing device (116) is arranged to determine a status of the vehicle (102) and configured to only compute a time-geofence (206) if the vehicle status indicates that the vehicle is not working.

2. The system of claim 1, further comprising:
a speed determining device connected to the vehicle (102) for determining a speed of the vehicle,
wherein the first communication device (112) sends data representative of the speed of the vehicle, and
wherein the time-geofence (206) is computed using the speed of the vehicle.

3. The system of claim 1, further comprising:
a storage device for storing data representative of a geofence boundary (204); and
a second computing device (110) in communication with the location-determining device (108), the first communication device (112), and the storage device for causing the first communication device (112) to send the data representative of the location of the vehicle only if the location of the vehicle is within the geofence boundary (204).

4. The system of claim 1, further comprising a storage device for storing the data representative of the location of the vehicle (102) as prior locations of the vehicle, and wherein the computing device (116) is operable to compute a speed of the vehicle based on the prior locations of the (vehicle.

5. The system of claim 1, wherein the location-determining device (108) is a global positioning system (GPS) receiver.

6. The system of claim 2, wherein the speed determining device is a GPS receiver.

7. The system of claim 3, wherein the geofence boundary (204) comprises a plurality of edges and wherein each edge comprises a plurality of points and wherein each point corresponds to a geographic location.

8. The system of claim 1, wherein the vehicle (102) is a combine, an agricultural sprayer, or a tractor.

9. The system of claim 3, wherein the time-geofence (206) is within the geofence boundary (204).

10. The system of claim 1, wherein the time-geofence (206) corresponds to a boundary that if the location of the vehicle (102) is within the boundary the vehicle will arrive at the point of interest at earlier than the expiration of the predetermined interval, and if the vehicle is outside the boundary the vehicle will arrive at the point of interest at later than the expiration of the predetermined interval.

11. A method of alerting a user located at a point of interest (202) that an agricultural vehicle (102) will arrive at the point of interest within a predetermined time interval, the method comprising:
receiving with a processing device (116) a location signal containing data representative of a location of the vehicle;
computing with the processing device, at least partially based on the location signal, a speed of the vehicle;
determining with the processing device, at least partially based on the location signal and the speed of the vehicle, a time-geofence (206) comprising a locus of points corresponding to geographic locations wherein locations within the time-geofence correspond to locations where the vehicle can arrive at the point of interest within the predetermined time interval, and locations outside the time-geofence correspond to locations where the vehicle cannot arrive at the point of interest within the predetermined time interval;
determining with the processing device, at least partially based on the location signal and the speed of the vehicle, whether the vehicle is within the time-geofence (206); and
alerting the user when the vehicle crosses the time-geofence,
**characterised by** determining with the processing device (116) a vehicle status;
wherein the processing device only determines the time-geofence (206) if the vehicle status indicates the vehicle is not working.

12. The method of claim 11, wherein alerting the user further comprises identifying the vehicle (102) and the vehicle's estimated time of arrival.

13. The method of claim 11, wherein the method of alerting the user comprises sending an e-mail, updating a web page, sending an short message service (SMS) message, sending an instant message, playing a sound, displaying a message on a computer display, or sending a message to a pager.

14. A computer readable medium encoded with code segments for alerting a user that an agricultural vehicle (102) will arrive at a point of interest (202) within a predetermined time interval, the computer readable medium comprising:
a location-determining code segment executable by a processing device (116) for computing a geographic location of the vehicle;
a geofencing code segment executable by the processing device for determining whether the location of the vehicle (102) is within a defined boundary;
a transmitting code segment executable by the processing device for transmitting the location of the vehicle if the location of the vehicle is within the defined boundary;
a receiving code segment executable by the processing device for receiving the location of the vehicle;
a time-geofencing code segment executable by the processing device for determining a time-geofence (206) comprising a locus of points around the point of interest corresponding to geographic locations wherein locations within the time-geofence correspond to locations where the vehicle can arrive at the point of interest (202) within the predetermined time interval, and locations outside the time-geofence correspond to locations where the vehicle cannot arrive at the point of interest within the predetermined time interval; and
an alerting code segment executable by the processing device for alerting the user when the location of the vehicle is within the time-geofence, **characterised by** a status-determining code segment executable by the processing device for determining a status of the vehicle (102);
wherein the time-geofencing code segment is only executed if the status of the vehicle indicates the vehicle is not working.

15. The computer readable medium of claim 14, further comprising:
a speed-determining code segment executable by the processing device (116) for computing a current speed of the vehicle, and
the receiving code segment is operable to receive the current speed,
wherein the transmitting code segment is operable to transmit the location of the vehicle and the current speed and the time-geofencing code segment determines the time-geofence boundary (206) at least in part based on the current speed of the vehicle, and
the time-geofence comprises the locus of points around the point of interest corresponding to the geographic locations wherein the locations within the time-geofence correspond to the locations where the vehicle can arrive at the point of interest within the predetermined time interval at the current speed, and the locations outside the time-geofence correspond to locations where the vehicle cannot arrive at the point of interest within the predetermined time interval at the current speed.

16. The computer readable medium of claim 14, wherein alerting the user comprises sending an e-mail, updating a web page, sending an short message service (SMS) message, sending an instant message, playing a sound, displaying a message on a computer display, or sending a message to a pager.

17. The computer readable medium of claim 14, wherein alerting the user comprises sending an identifier corresponding to the vehicle.

## Patentansprüche

1. System (100) zur Benachrichtigung oder Warnung eines Benutzers, dass ein landwirtschaftliches Fahrzeug (102) innerhalb einer vorbestimmten Zeitspanne an einem Zielpunkt (202) ankommen wird, mit:
einer Einrichtung (108) zur Bestimmung des Orts des Fahrzeugs, die mit dem Fahrzeug verbunden ist;
einer ersten Kommunikations-Einrichtung (112), die mit der den Ort ermittelnden Einrichtung (108) verbunden ist und zum Senden von Daten über ein Kommunikations-Netzwerk dient, die für den Ort des Fahrzeugs repräsentativ sind;
einer zweiten Kommunikations-Einrichtung (114), die zum Empfangen der Daten von der ersten Kommunikations-Einrichtung (112) dient; und
einer Rechner-Einrichtung (116), welche mit der zweiten Kommunikations-Einrichtung (114) kommuniziert und zum Berechnen eines Zeit-Geofences oder zeitabhängigen örtlichen Gebiets (206) und zum Benachrichtigen oder Warnen des Nutzers, dass das Fahrzeug innerhalb der vorbestimmten Zeitspanne an dem Zielpunkt (202) ankommen wird, dient,
**dadurch gekennzeichnet, dass** die Rechner-Einrichtung (116) geeignet gestaltet ist zur Ermittlung eines Status des Fahrzeugs (102) und geeignet konfiguriert ist, um lediglich ein Zeit-Geofence oder zeitabhängiges örtliches Gebiet (206) zu berechnen, wenn der Status des Fahrzeugs indiziert, dass das Fahrzeug defekt oder nicht im Arbeitsbetrieb ist.

2. System nach Anspruch 1 mit:
einer Einrichtung zur Ermittlung einer Geschwindigkeit des Fahrzeugs, die mit dem Fahrzeug (102) verbunden ist,
wobei die erste Kommunikations-Einrichtung (112) Daten sendet, die repräsentativ für die Geschwindigkeit des Fahrzeugs sind, und
das Zeit-Geofence oder zeitabhängige örtliche Gebiet (206) unter Verwendung der Geschwindigkeit des Fahrzeugs berechnet wird.

3. System nach Anspruch 1 mit:
einer Speicher-Einrichtung zum Speichern von Daten, die repräsentativ sind für eine Geofence- oder eine Gebiets-Grenze (204); und
einer zweiten Rechner-Einrichtung (110), die mit der den Ort ermittelnden Einrichtung (108), der ersten Kommunikations-Einrichtung (112) und der Speicher-Einrichtung kommuniziert, um zu verursachen, dass die erste Kommunikations-Einrichtung (112) die Daten, die repräsentativ für den Ort des Fahrzeugs sind, lediglich sendet, wenn sich der Ort des Fahrzeugs innerhalb der Geofence- oder Gebiets-Grenze (204) befindet.

4. System nach Anspruch 1 mit einer Speicher-Einrichtung zum Speichern der Daten, die repräsentativ für den Ort des Fahrzeugs (102) sind, als vorangegangene Orte des Fahrzeugs, wobei die Rechner-Einrichtung (116) derart betreibbar ist, dass diese eine Geschwindigkeit des Fahrzeugs auf Grundlage von vorangegangenen Orten des Fahrzeugs berechnet.

5. System nach Anspruch 1, wobei die den Ort ermittelnde Einrichtung (108) ein GPS-Empfänger ist.

6. System nach Anspruch 2, wobei die die Geschwindigkeit ermittelnde Einrichtung ein GPS-Empfänger ist.

7. System nach Anspruch 3, wobei die Geofence- oder Gebiets-Grenze (204) mehrere Ränder aufweist, wobei jeder Rand mehrere Punkte besitzt und wobei jeder Punkt einem geografischen Ort entspricht.

8. System nach Anspruch 1, wobei das Fahrzeug (102) ein Mähdrescher, ein landwirtschaftliches Sprühfahrzeug oder ein Traktor oder Zugfahrzeug ist.

9. System nach Anspruch 3, wobei das Zeit-Geofence oder zeitabhängige örtliche Gebiet (206) innerhalb der Geofence- oder Gebiets-Grenze (204) liegt.

10. System nach Anspruch 1, wobei das Zeit-Geofence oder zeitabhängige örtliche Gebiet (206) einer Grenze entspricht oder mit dieser korreliert, welche dergestalt ist, dass, wenn der Ort des Fahrzeugs (102) innerhalb der Grenze ist, das Fahrzeug an dem Zielpunkt früher ankommen wird als nach der vorbestimmten Zeitspanne, während dann, wenn sich das Fahrzeug außerhalb der Grenze befindet, das Fahrzeug an dem Zielpunkt später als nach der vorbestimmten Zeitspanne ankommen wird.

11. Verfahren zur Benachrichtigung oder Warnung eines Benutzers, welcher sich an einem Zielpunkt (202) befindet, dass ein Fahrzeug (102) an dem Zielpunkt innerhalb eines vorbestimmten Zeitintervalls ankommen wird, mit folgenden Verfahrensschritten:
Empfangen eines Ortsignals, welches Daten hinsichtlich eines Orts des Fahrzeugs beinhaltet, durch eine verarbeitende Einrichtung (116),
zumindest teilweise basierend auf dem Ortsignal Berechnen einer Geschwindigkeit des Fahrzeugs durch die verarbeitende Einrichtung;
zumindest teilweise auf Basis des Ortsignals und der Geschwindigkeit des Fahrzeugs Ermittlung eines Zeit-Geofences oder zeitabhängigen örtlichen Gebiets (206) durch die verarbeitende Einrichtung mit Punkten entsprechend den geografischen Orten, wobei Orte in dem Zeit-Geofence oder zeitabhängigen örtlichen Gebiet Orten entsprechen, an denen das Fahrzeug an dem Zielpunkt innerhalb des vorbestimmten Zeitintervalls ankommen kann, und Orte außerhalb des Zeit-Geofences oder zeitabhängigen örtlichen Gebiets (206) Orten entsprechen, an denen das Fahrzeug nicht an dem Zielpunkt innerhalb des vorbestimmten Zeitintervalls ankommen kann;
zumindest teilweise auf Basis des Ortsignals und der Geschwindigkeit des Fahrzeugs Ermittlung durch die verarbeitende Einrichtung, ob sich das Fahrzeug innerhalb des Zeit-Geofences oder zeitabhängigen örtlichen Gebiets (206) befindet; und
Benachrichtigung oder Warnung des Benutzers, wenn das Fahrzeug das Zeit-Geofence oder zeitabhängige örtliche Gebiet (206) überschreitet,
**dadurch gekennzeichnet, dass** die verarbeitende Einrichtung (116) einen Status des Fahrzeugs ermittelt,
wobei die verarbeitende Einrichtung lediglich das Zeit-Geofence oder zeitabhängige örtliche Gebiet (206) ermittelt, wenn der Status des Fahrzeugs indiziert, dass das Fahrzeug defekt oder nicht im Arbeitsbetrieb ist.

12. Verfahren nach Anspruch 11, wobei die Benachrichtigung oder die Warnung des Benutzers ein Identifizieren des Fahrzeugs (102) und ein Identifizieren der geschätzten Ankunftszeit des Fahrzeugs beinhaltet.

13. Verfahren nach Anspruch 11, wobei das Verfahren der Benachrichtigung oder Warnung des Benutzers das Senden einer E-Mail, das Updaten einer Website, das Senden einer SMS, das Senden einer sofortigen Nachricht, das Abspielen eines Tons, die Anzeige einer Nachricht auf einem Computer-Display oder das Senden einer Nachricht an einen Pager umfasst.

14. Computerlesbares Medium mit Code- oder Software-Segmenten (im folgenden "Software-Segmente") zur Benachrichtigung oder Warnung eines Nutzers, dass ein landwirtschaftliches Fahrzeug (102) innerhalb einer vorbestimmten Zeitspanne an einem Zielpunkt (202) ankommen wird, mit:
einem Software-Segment zur Ermittlung eines Orts, welches auf einer verarbeitenden Einrichtung (116) ausführbar ist zur Berechnung eines geografischen Orts des Fahrzeugs,
einem Software-Segment für ein Geofence oder örtliches Gebiet, wobei das Segment durch die verarbeitende Einrichtung ausführbar ist zur Ermittlung, ob sich der Ort des Fahrzeugs (102) innerhalb einer vorbestimmten Grenze befindet;
einem Übertragungs-Software-Segment, welches ausführbar ist durch die verarbeitende Einrichtung zur Übertragung des Orts des Fahrzeugs, wenn der Ort des Fahrzeugs sich innerhalb der definierten Grenze befindet;
einem Empfangs-Software-Segment, welches durch die verarbeitende Einrichtung ausführbar ist, um den Ort des Fahrzeugs zu empfangen;
einem Software-Segment für ein Zeit-Geofence oder zeitabhängiges örtliches Gebiet, wobei das Software-Segment durch die verarbeitende Einrichtung ausführbar ist zur Ermittlung eines Zeit-Geofences oder zeitabhängigen örtlichen Gebiets (206) mit Punkten um den Zielpunkt, die mit den geografischen Orten korrespondieren, wobei Orte in dem Zeit-Geofence oder zeitabhängigen örtlichen Gebiet Orten entsprechen, an denen das Fahrzeug innerhalb der vorbestimmten Zeitspanne an dem Zielpunkt (202) ankommen kann, und wobei Orte außerhalb des Zeit-Geofences oder zeitabhängigen örtlichen Gebiets Orten entsprechen, an denen das Fahrzeug innerhalb der vorbestimmten Zeitspanne nicht an dem Zielpunkt ankommen kann; und
einem Benachrichtigungs-Software-Segment, welches durch die verarbeitende Einrichtung zur Benachrichtigung oder Warnung des Benutzers, wenn sich der Ort des Fahrzeugs in dem Zeit-Geofence oder zeitabhängigen örtlichen Gebiet befindet, ausführbar ist
**gekennzeichnet durch** ein den Status ermittelndes Software-Segment, welches **durch** die verarbeitende Einrichtung ausführbar ist zur Ermittlung eines Status des Fahrzeugs (102),
wobei das Software-Segment für das Zeit-Geofence oder zeitabhängige örtliche Gebiet lediglich ausgeführt wird, wenn der Status des Fahrzeugs indiziert, dass das Fahrzeug defekt oder nicht im Arbeitsbetrieb ist.

15. Computerlesbares Medium nach Anspruch 14 mit:
einem Software-Segment zur Ermittlung einer Geschwindigkeit, welches auf der verarbeitenden Einrichtung (116) ausführbar ist zur Berechnung einer gegenwärtigen Geschwindigkeit des Fahrzeugs, und
wobei das Empfangs-Software-Segment betreibbar ist zum Empfangen der gegenwärtigen Geschwindigkeit und
das Übertragungs-Software-Segment betreibbar ist zum Übertragen des Orts des Fahrzeugs und der gegenwärtigen Geschwindigkeit und das Software-Segment für das Zeit-Geofence oder zeitabhängige örtliche Gebiet die Zeit-Geofence-Grenze (206) zumindest teilweise auf Basis der gegenwärtigen Geschwindigkeit des Fahrzeugs ermittelt, und
wobei das Zeit-Geofence oder zeitabhängige örtliche Gebiet die Punkte um den Zielpunkt aufweist, die den geografischen Orten entsprechen, wobei die Orte in dem Zeit-Geofence oder zeitabhängigen örtlichen Gebiet den Orten entsprechen, an denen das Fahrzeug an dem Zielpunkt innerhalb der vorbestimmten Zeitspanne mit der gegenwärtigen Geschwindigkeit ankommen kann, und Orte außerhalb des Zeit-Geofences oder zeitabhängigen örtlichen Gebiets Orten entsprechen, an denen das Fahrzeug nicht an dem Zielpunkt innerhalb der vorbestimmten Zeitspanne mit der gegenwärtigen Geschwindigkeit ankommen kann.

16. Computerlesbares Medium nach Anspruch 14, wobei die Warnung oder Benachrichtigung des Benutzers das Senden einer E-Mail, das Updaten einer Website, das Senden einer SMS, das Senden einer sofortigen Nachricht, das Abspielen eines Tons, die Anzeige einer Nachricht auf einem Computer-Display oder das Senden einer Nachricht an einen Pager aufweist.

17. Computerlesbares Medium nach Anspruch 14, wobei die Benachrichtigung oder Warnung des Benutzers das Senden einer Kennzeichnung, die mit dem Fahrzeug korrespondiert, beinhaltet.

## Revendications

1. Dispositif (100) destiné à alerter un utilisateur de l'arrivée d'un véhicule agricole (102) à un point déterminé (202) dans un intervalle de temps prédéterminé, le dispositif comprenant ;
un dispositif de détermination de position (108) raccordé au véhicule de manière à déterminer une position du véhicule ;
un premier dispositif de communication (112) raccordé au dispositif de détermination de position (108) afin d'envoyer des données représentatives de la position du véhicule sur un réseau de communication ;
un second dispositif de communication (114) destiné à recevoir des données à partir du premier dispositif de communication (112) ; et
un dispositif de calcul (116) en communication avec le second dispositif de communication (114) afin de calculer une barrière géographique virtuelle temporelle (206) et d'alerter l'utilisateur que le véhicule arrive au point déterminé (202) dans l'intervalle de temps prédéterminé,
**caractérisé en ce que** le dispositif de calcul (116) est agencé afin de déterminer un état du véhicule (102) et configuré de manière à calculer uniquement une barrière géographique virtuelle temporelle (206) si l'état de véhicule indique que le véhicule ne fonctionne pas.

2. Dispositif selon la revendication 1, comprenant en outre :
un dispositif de détermination de vitesse raccordé au véhicule (102) afin de déterminer une vitesse du véhicule,
dans lequel le premier dispositif de communication (112) envoie les données représentatives de la vitesse du véhicule, et
dans lequel la barrière géographique virtuelle temporelle (206) est calculée en utilisant la vitesse du véhicule.

3. Dispositif selon la revendication 1, comprenant en outre :
un dispositif de mémorisation afin de mémoriser des données représentatives d'une limite de barrière géographique virtuelle (204) ; et
un second dispositif de calcul (110) en communication avec le dispositif de détermination de position (108), le premier dispositif de communication (112) et le dispositif de mémorisation de manière à amener le premier dispositif de communication (112) à envoyer les données représentatives de la position du véhicule uniquement si la position du véhicule est à l'intérieur de la barrière géographique virtuelle (204).

4. Dispositif selon la revendication 1, comprenant en outre un dispositif de mémorisation destiné à mémoriser les données représentatives de la position du véhicule (102) sous la forme de positions antérieures du véhicule, et dans lequel le dispositif de calcul (116) peut servir à calculer une vitesse du véhicule sur la base des positions antérieures du véhicule.

5. Dispositif selon la revendication 1, dans lequel le dispositif de détermination de position (108) est un récepteur de système de positionnement global (GPS).

6. Dispositif selon la revendication 2, dans lequel le dispositif de détermination de vitesse est un récepteur GPS.

7. Dispositif selon la revendication 3, dans lequel la limite de barrière géographique virtuelle (204) comprend une pluralité de limites et dans lequel chaque limite comprend une pluralité de points et dans lequel chaque point correspond à une position géographique.

8. Dispositif selon la revendication 1, dans lequel le véhicule (102) est une moissonneuse batteuse, un pulvérisateur agricole, ou un tracteur.

9. Dispositif selon la revendication 3, dans lequel la barrière géographique virtuelle temporelle (206) est à l'intérieur de la limite de barrière géographique virtuelle (204).

10. Dispositif selon la revendication 1, dans lequel la barrière géographique virtuelle temporelle (206) correspond à une limite telle que, si la position du véhicule (102) est à l'intérieur de la limite, le véhicule arrive au point déterminé plus tôt, avant l'expiration de l'intervalle prédéterminé, et si le véhicule est à l'extérieur de la limite le véhicule arrive au point déterminé plus tard, après l'expiration de l'intervalle prédéterminé.

11. Procédé destiné à alerter un utilisateur situé à un point déterminé (202) du fait qu'un véhicule agricole (102) arrive au point déterminé à l'intérieur d'un intervalle de temps prédéterminé, le procédé comprenant :
la réception, avec un dispositif de traitement (116), d'un signal de position contenant des données représentatives d'une position du véhicule ;
le calcul, avec le dispositif de traitement, au moins partiellement sur la base du signal de position, d'une vitesse du véhicule ;
la détermination, avec le dispositif de traitement, au moins partiellement sur la base du signal de position et de la vitesse du véhicule, d'une barrière géographique virtuelle temporelle (206) comprenant un lieu de points correspondant à des positions géographiques dans lesquelles les positions à l'intérieur de la barrière géographique virtuelle temporelle correspondent à des positions auxquelles le véhicule peut arriver au point déterminé dans l'intervalle de temps prédéterminé, et les positions à l'extérieur de la barrière géographique virtuelle temporelle correspondent aux positions auxquelles le véhicule ne peut pas arriver au point déterminé dans l'intervalle de temps prédéterminé ;
la détermination, avec le dispositif de traitement, au moins partiellement sur la base du signal de position et de la vitesse du véhicule, du fait que le véhicule est à l'intérieur d'une barrière géographique virtuelle temporelle (206) ; et
l'alerte de l'utilisateur lorsque le véhicule traverse la barrière géographique virtuelle temporelle,
**caractérisé par** la détermination, avec le dispositif de traitement (116), d'un état de véhicule ;
dans lequel le dispositif de traitement détermine uniquement la barrière géographique virtuelle temporelle (206) si l'état de véhicule indique que le véhicule ne fonctionne pas.

12. Procédé selon la revendication 11, dans lequel l'alerte de l'utilisateur comprend en outre l'identification du véhicule (102) et l'heure d'arrivée estimée du véhicule.

13. Procédé selon la revendication 11, dans lequel le procédé d'alerte de l'utilisateur comprend l'envoi d'un message électronique, l'actualisation d'une page "internet", l'envoi d'un message du type service de message court (SMS), l'envoi d'un message instantané, la diffusion d'un son, l'affichage d'un message sur un dispositif d'affichage d'ordinateur, ou l'envoi d'un message sur un dispositif du type "Alphapage".

14. Support pouvant être lu par ordinateur codé avec des segments de code destinés à alerter un utilisateur du fait qu'un véhicule agricole (102) arrive à un point déterminé (202) dans un intervalle de temps prédéterminé, le support pouvant être lu par ordinateur comprenant :
un segment de code de détermination de position pouvant être exécuté par un dispositif de traitement (116) afin de calculer une position géographique du véhicule ;
un segment de code de détermination de barrière géographique virtuelle pouvant être exécuté par le dispositif de traitement afin de déterminer si la position du véhicule (102) est à l'intérieur d'une limite définie ;
un segment de code d'émission pouvant être exécuté par le dispositif de traitement afin de transmettre la position du véhicule si la position du véhicule est à l'intérieur de la limite définie ;
un segment de code de réception pouvant être exécuté par le dispositif de traitement afin de recevoir la position du véhicule ;
un segment de code de détermination de barrière géographique virtuelle temporelle pouvant être exécuté par le dispositif de traitement afin de déterminer une barrière géographique virtuelle temporelle (206) comprenant un lieu de points autour du point déterminé correspondant à des positions géographiques dans lesquelles les positions à l'intérieur de la barrière géographique virtuelle temporelle correspondent à des positions auxquelles le véhicule peut arriver au point déterminé (202) dans l'intervalle de temps prédéterminé, et les positions à l'extérieur de la barrière géographique virtuelle temporelle correspondent à des positions auxquelles le véhicule ne peut pas arriver au point déterminé dans l'intervalle de temps prédéterminé ; et
un segment de code d'alerte pouvant être exécuté par le dispositif de traitement afin d'alerter l'utilisateur lorsque la position du véhicule est à l'intérieur de la barrière géographique virtuelle temporelle,
**caractérisé par** un segment de code de détermination d'état pouvant être exécuté par le dispositif de traitement afin de déterminer un état du véhicule (102) ;
dans lequel le segment de code de détermination de barrière géographique virtuelle temporelle est exécuté uniquement si l'état du véhicule indique que le véhicule ne fonctionne pas.

15. Support pouvant être lu par ordinateur codé selon la revendication 14, comprenant en outre :
un segment de code de détermination de vitesse pouvant être exécuté par le dispositif de traitement (116) afin de calculer la vitesse réelle du véhicule, et
le segment de code de réception pouvant être exécuté afin de recevoir la vitesse réelle,
dans lequel le segment de code de transmission peut servir à transmettre la position du véhicule et la vitesse réelle et le segment de code de détermination de barrière géographique virtuelle temporelle détermine la limite de barrière géographique virtuelle temporelle (206) au moins en partie sur la base de la vitesse réelle du véhicule, et
la barrière géographique virtuelle temporelle comprend le lieu de points autour du point déterminé correspondant aux positions géographiques dans lesquelles les positions à l'intérieur de la barrière géographique virtuelle temporelle correspondent aux positions auxquelles le véhicule peut arriver au point déterminé dans l'intervalle de temps prédéterminé à la vitesse réelle, et les positions à l'extérieur de la barrière géographique virtuelle temporelle correspondent aux positions auxquelles le véhicule ne peut pas arriver au point déterminé dans l'intervalle de temps prédéterminé à la vitesse réelle.

16. Support pouvant être lu par ordinateur codé selon la revendication 14, dans lequel l'alerte de l'utilisateur comprend l'envoi d'un message électronique, la mise à jour d'une page Web, l'envoi d'un message du type service de message court (SMS), l'envoi d'un message instantané, la diffusion d'un son, l'affichage d'un message sur un écran d'ordinateur, ou l'envoi d'un message sur un dispositif du type "Alphapage".

17. Support pouvant être lu par ordinateur codé selon la revendication 14, dans lequel l'alerte de l'utilisateur comprend l'envoi d'un identificateur correspondant au véhicule.
